(19) Europäisches Patentamt
European Patent Office
Office européen des brevets

(11) **EP 1 018 631 B1**

(12) **EUROPÄISCHE PATENTSCHRIFT**

(45) Veröffentlichungstag und Bekanntmachung des Hinweises auf die Patenterteilung:
**07.03.2007 Patentblatt 2007/10**

(51) Int Cl.:
*G01B 11/12* *(2006.01)*        *G01B 11/22* *(2006.01)*
*G01B 11/24* *(2006.01)*

(21) Anmeldenummer: **99124365.0**

(22) Anmeldetag: **07.12.1999**

(54) **Messeinrichtung zur Erfassung von Dimensionen von Prüflingen sowie Verfahren unter Verwendung der Messeinrichtung**

Device to measure dimensions of objects and procedure to use same device

Dispositif de mesure de dimensions d'objets et procédé pour mettre en oeuvre le dispositif

(84) Benannte Vertragsstaaten:
**AT BE CH CY DE DK ES FI FR GB GR IE IT LI LU MC NL PT SE**

(30) Priorität: **23.12.1998 DE 19859679**

(43) Veröffentlichungstag der Anmeldung:
**12.07.2000 Patentblatt 2000/28**

(73) Patentinhaber: **JEL Precision Tools GmbH & Co. KG**
**70565 Stuttgart (DE)**

(72) Erfinder:
 • **Franz, Stefan**
  **70327 Stuttgart (DE)**
 • **Windecker, Robert Dr.**
  **76275 Ettlingen (DE)**

(74) Vertreter: **Kohl, Karl-Heinz et al**
**Patentanwälte**
**Dipl.-Ing. A.K. Jackisch-Kohl**
**Dipl.-Ing. K.H. Kohl**
**Stuttgarter Strasse 115**
**70469 Stuttgart (DE)**

(56) Entgegenhaltungen:
**EP-A- 0 267 705        DE-A- 3 515 546**
**DE-A- 4 016 441**

 • **PATENT ABSTRACTS OF JAPAN vol. 1995, no. 10, 30. November 1995 (1995-11-30) -& JP 07 190734 A (OLYMPUS OPTICAL CO LTD), 28. Juli 1995 (1995-07-28)**

## Beschreibung

Die Erfindung betrifft ein Werkzeug nach dem Oberbegriff des Anspruches 1, ein Verfahren unter Verwendung eines solchen Werkzeuges nach dem Oberbegriff des Anspruches 12 sowie eine Meßeinrichtung zur Verwendung bei einem solchen Werkzeug nach dem Oberbegriff des Anspruches 16.

Bei der Herstellung von Bohrungen, Passungen und dergleichen in Werkstücken ist es notwendig, daß die Bohrungen genaue Durchmesser haben. Aus diesem Grunde werden Bohrungen nach dem Bohrvorgang mit entsprechenden Meßgeräten vermessen. Stellen sich hierbei Maßungenauigkeiten heraus, ist eine Nachbearbeitung erforderlich.

Es sind Meßgeräte in Form von interferometern bekannt (JP-A-07190734), mit denen die Innen- und die Außenfläche von Zylindern vermessen wird.

Der Erfindung liegt die Aufgabe zugrunde, das gattungsgemäße Werkzeug, das gattungsgemäße Verfahren sowie die gattungsgemäße Meßeinrichtung so auszubilden, daß die Dimensionen der Prüflinge einfach, genau und schnell erfaßt werden können.

Diese Aufgabe wird beim gattungsgemäßen Werkzeug erfindungsgemäß mit den kennzeichnenden Merkmalen des Anspruches 1, beim gattungsgemäßen Verfahren erfindungsgemäß mit den kennzeichnenden Merkmalen des Anspruches 12 und bei der gattungsgemäßen Meßeinrichtung erfindungsgemäß mit den kennzeichnenden Merkmalen des Anspruches 16 gelöst.

Mit dem erfindungsgemäßen Werkzeug und der erfindungsgemäßen Meßeinrichtung lassen sich die Dimensionen von Prüflingen, beispielsweise der Durchmesser von Bohrungen in Werkstücken, hochgenau und dennoch einfach erfassen. Der von der Lichtquelle ausgesandte Strahl wird am Strahlteiler in einen Referenzstrahl und in einen Meßstrahl aufgeteilt. Während der Meßstrahl zur Meßstelle am Prüfling gelenkt wird, wird der Referenzstrahl zu einem Referenzspiegel gelenkt. Beide Strahlen werden nach ihrer Reflexion an der Meßstelle bzw. am Referenzspiegel wieder zusammengeführt und dem Empfänger zugeführt. Aufgrund der Überlagerung der Strahlen ergibt sich ein Interferenzkontrast, anhand dessen die gewünschte Aussage über die gemessene Dimension des Prüflings erhalten werden kann. Mit dem erfindungsgemäßen Werkzeug und dem erfindungsgemäßen Verfahren ist es möglich, bereits während der Bearbeitung des Werkstückes mit dem Werkzeug die Dimension zu erfassen, so daß gegebenenfalls notwendige Korrekturen schon während der Bearbeitung vorgenommen werden können.

Bei der erfindungsgemäßen Meßeinrichtung, die für das Werkzeug verwendet wird, wird der optische Wegunterschied zwischen dem Referenzstrahl und dem Meßstrahl durch Verschieben des Strahlteilers in Richtung des Meßstrahles durchgestimmt.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsbeispiele näher erläutert. Es zeigen

Fig. 1   in schematischer Darstellung und im Schnitt ein Werkzeug mit einer erfindungsgemäßen Meßeinrichtung,

Fig. 2   ein Informationsflußschema der im erfindungsgemäßen Werkzeug untergebrachten Meßeinrichtung,

Fig. 3   ein optisches Schema der Meßeinrichtung ,

Fig. 4   den Strahlengang der Beleuchtung der Meßeinrichtung,

Fig. 5   den Referenz- und Meßarm der Meßeinrichtung,

Fig. 6   den Interreferenzarm der Meßeinrichtung,

Fig. 7   in schematischer Darstellung die Wirkungsweise der Meßeinrichtung,

Fig. 8   ein Meßsignal, das mit der Meßeinrichtung aufgenommen worden ist,

Fig. 9   ein optisches Schema einer zweiten Ausführungsform einer Meßeinrichtung.

Mit dem Werkzeug können Dimensionen an Werkstücken, vorzugsweise von Bohrungen, einfach und dennoch genau erfaßt werden. Die hierzu vorgesehene Meßeinrichtung ist im Werkzeug untergebracht, das beispielsweise ein Bohr- oder Gewindefräswerkzeug sein kann. Mit der Meßanordnung können aber auch Nutentiefen oder Bohrtiefen in einem Werkstück gemessen werden. Die Messung kann bereits während der Bearbeitung durch das Werkzeug vorgenommen werden. Aufgrund der Messung kann das Werkzeug und/oder das zu bearbeitende Werkstück online bis zum Sollergebnis nachgeführt werden. Das Arbeitsergebnis, beispielsweise die Rundheit einer Bohrung oder deren Durchmesser, wird vorzugsweise unmittelbar während der Bearbeitung gemessen und ausgewertet. Dadurch können Bearbeitungsfehler sofort erkannt und korrigiert werden. Das fertig bearbeitete Werkstück bedarf keiner weiteren Überprüfung mehr. Da eine Korrektur während der Bearbeitung durchgeführt werden kann, ergeben sich sehr kurze Bearbeitungszeiten und vor allem hervorragende Ergebnisqualitäten. Auch die Werkzeuglebensdauer wird optimal ausgenutzt, da infolge der online-Messung und -Auswertung während der Bearbeitung das Werkzeug optimal lange zur Bearbeitung eingesetzt werden kann.

Es ist auch möglich, mit dem Werkzeug die Bearbeitung am Werkstück durchzuführen und unmittelbar anschließend das Bearbeitüngsergebnis zu messen und auszuwerten. Entspricht das Bearbeitungsergebnis nicht den gewünschten Anforderungen, wird unmittelbar anschließend die Werkzeug- und/oder Werkstückbewegung im erforderlichen Maße korrigiert und eine Nachbearbeitung durchgeführt.

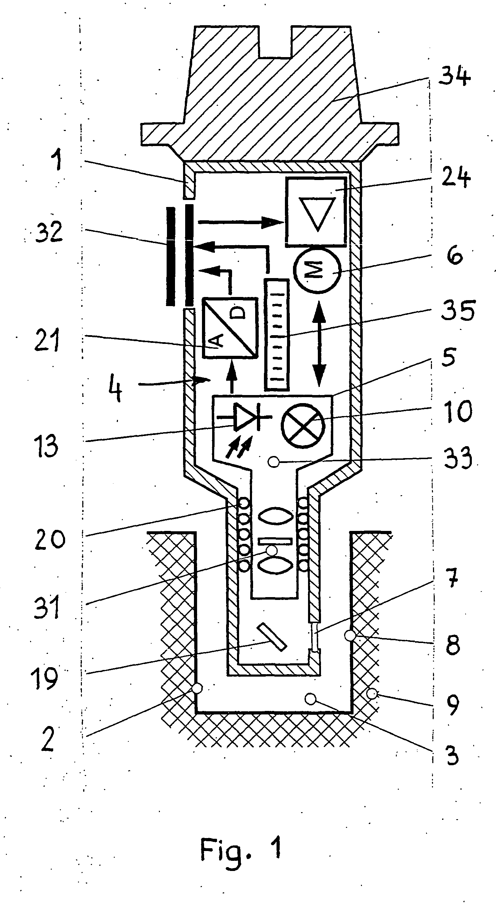

Fig. 1 zeigt in schematischer Darstellung ein Fräswerkzeug 1 mit einem Schaft 34. Mit dem Werkzeug wird in einem Werkstück 2 eine Bohrung 3 in bekannter Weise gefräst. Das Werkzeug 1 ist als Hohlkörper ausgebildet, in dem eine Meßeinrichtung 4 untergebracht ist. Sie hat ein Gehäuse 5, in dem der größte Teil der Elemente der Meßeinrichtung geschützt untergebracht ist. Die Meßeinrichtung 4 kann mit einem Linearantrieb 6 in Achsrichtung des Werkzeuges 1 verfahren werden. Das Werkzeug 1 weist nahe dem freien Ende wenigstens ein Fenster 7 auf, durch das in noch zu beschreibender Weise ein Meßstrahl aus dem Werkzeug 1 austreten und an die Meßstelle 8 gelangen kann. Die Meßstelle 8 ist im dargestellten Ausführungsbeispiel in der Wandung 9 der Bohrung 3 vorgesehen.

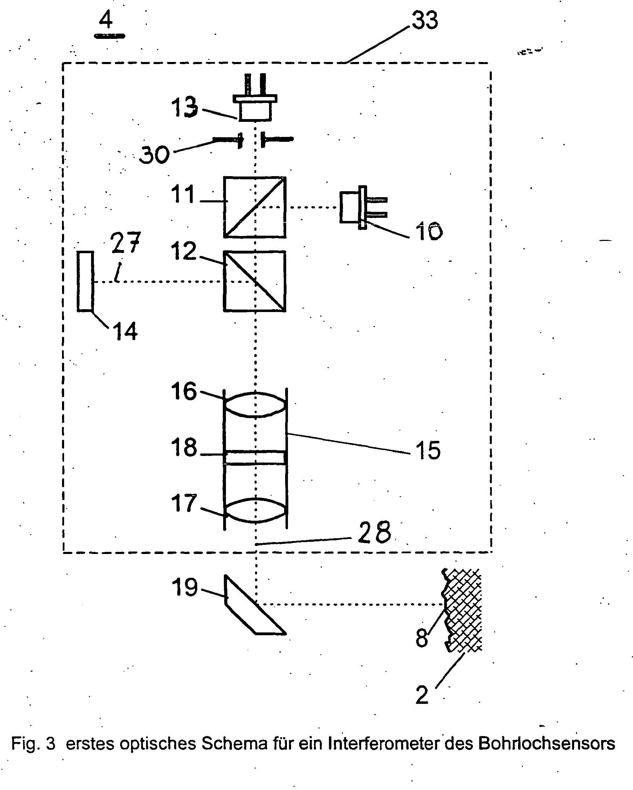

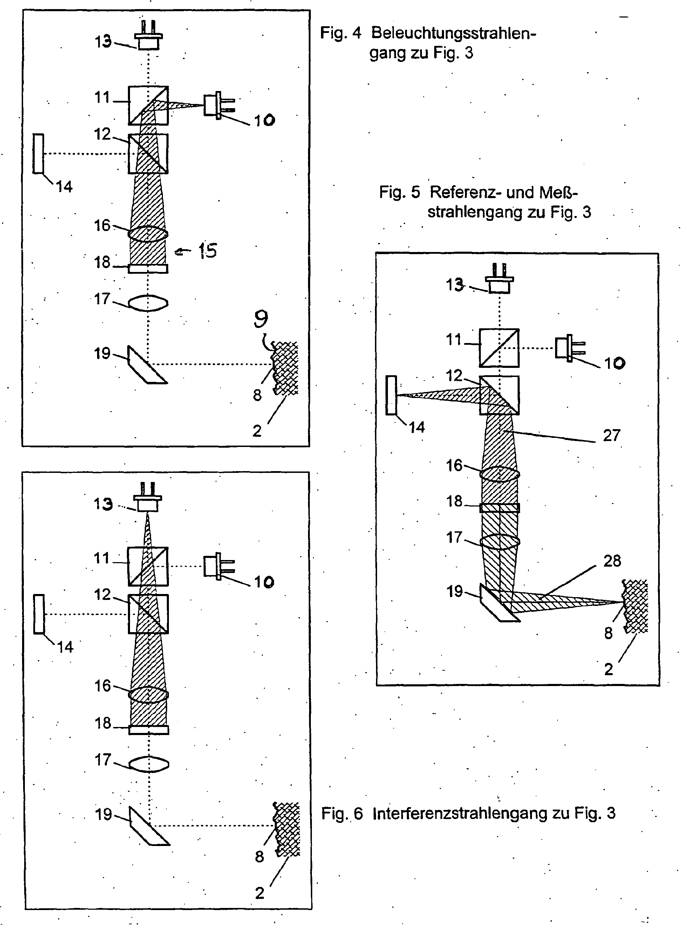

Eine Beispielsanordnung der Meßeinrichtung 4 wird anhand von Fig. 3 näher erläutert. Sie hat eine Lichtquelle 10, die breitbandig ausgebildet ist und vorteilhaft durch eine LED gebildet wird. Die Lichtquelle 10 kann aber beispielsweise auch eine Halogenlampe, eine Superlumineszenzdiode, eine Laserdiode und dergleichen sein. Ihr nachgeschaltet ist ein Strahlteiler 11, durch den das von der Lichtquelle 10 ausgesandte Licht zu einem weiteren Strahlteiler 12 umgelenkt wird.

Dem Strahlteiler 12 nachgeschaltet ist ein Linsensystem 15, das aus einem Kollimator 16, einem Objektiv 17 und einem dazwischenlegenden Strahlteiler 18 besteht. An ihm wird ein Teil des Strahls zum Strahlteiler 12 zurückreflektiert, der diesen Strahl 27 zu einem Referenzspiegel 14 umlenkt. Das Linsensystem 15 liegt wie die Stahlteiler 11, 12 in der Achse der Meßeinrichtung 4. Dem Linsensystem 15 ist ein Umlenkspiegel 19 nachgeschaltet, mit dem der durch den Strahlteiler 18 hindurchgehende Lichtstrahl 28 durch das Fenster 7 im Werkzeug 1 zur Meßstelle 8 in der Bohrungswandung 9 gelenkt wird.

Wie Fig. 1 zeigt, hat die Meßeinrichtung 4 ein Interferometer 31, das im Gehäuse 5 untergebracht ist. Der Umlenkspiegel 19 befindet sich außerhalb des Gehäuses 5, das über wenigstens ein Linearlager 20 im Werkzeug 1 axial verschiebbar abgestützt.

Anhand der Fig. 4 bis 6 wird die Wirkungsweise der Meßeinrichtung näher erläutert. Aus Gründen der Übersichtlichkeit sind in den Fig. 4 bis 6 die unterschiedlichen Strahlengänge der Meßeinrichtung eingezeichnet. Fig. 4 zeigt die Beleuchtung der Meßstelle 8 in der Bohrungswandung 9 des Werkstückes 2. Das von der Lichtquelle 10 ausgesandte Licht wird am Strahlteiler 11 um 90° zum Strahlteiler 12 umgelenkt. Von ihm gelangt der Lichtstrahl zum Linsensystem 15.

Das von der Lichtquelle 10 ausgesandte Licht wird, wie Fig. 5 zeigt, durch den Strahlteiler 11 zum Strahlteiler 12 und von ihm zum Referenzspiegel 14 umgelenkt (Strahl 27), an dem der Lichtstrahl 27 zurück zu den Strahlteilern 12, 18 reflektiert wird. Der vom Strahlteiler 18 hindurchgelassene Lichtstrahl 28 wird zum Umlenkspiegel 19 geleitet, der den Lichtstrahl auf die Meßstelle 8 lenkt. Hier wird der Lichtstrahl zurück zum Umlenkspiegel 19 reflektiert. Von ihm aus wird der Lichtstrahl 28 zum Strahlteiler 18 umgelenkt.

Am Strahlteiler 18 werden der vom Referenzspiegel 14 reflektierte Lichtstrahl 27 und der vom Umlenkspiegel 19 kommende Lichtstrahl 28 wieder vereint und einem Empfänger 13 zugeführt (Fig. 6). Er ist optoelektronisch ausgebildet, beispielsweise durch eine Fotodiode gebildet.

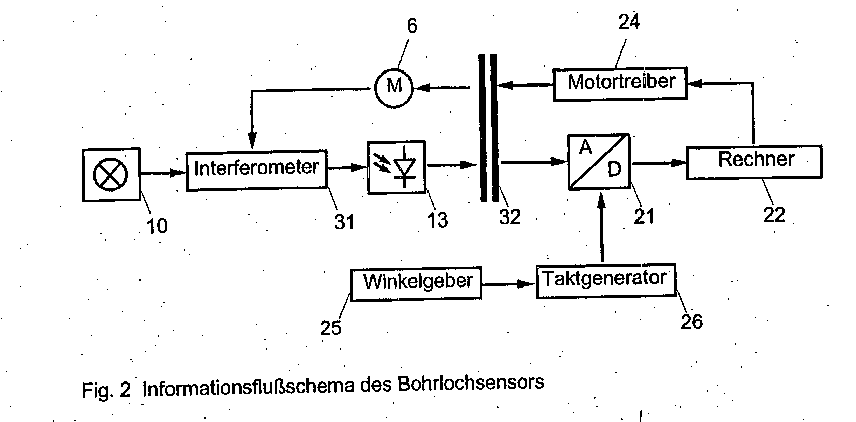

Wie Fig. 2 zeigt, werden die vom Empfänger 13 aufgenommenen Lichtstrahlen einem Analog/Digital-Wandler 21 zugeführt, dessen gewandelte Digitalsignale durch einen nachfolgenden Rechner 22 ausgewertet werden. Die Signalauswertung kann auch auf analogem Wege vorgenommen werden.

Der Empfänger 13 kann auch als intelligentes Fotosensor-Array mit Signalverarbeitung, zum Beispiel mit A/D-Wandlung und/oder Signalverstärkung, ausgebildet sein. Die erhaltenen Signale können dann direkt zum Rechner 22 weitergeleitet werden.

Da die Bohrungswandung 9 über ihren Umfang durch Interferenzmessung gemessen werden soll, wird die ein Interferometer 31 aufweisende Meßeinrichtung 4 gedreht. Es ist möglich, die Meßeinrichtung 4 innerhalb des Werkzeuges 1 zu drehen, wobei, jeweils je nach gewünschter Meßgenauigkeit, die Meßeinrichtung 4 um bestimmte Drehwinkel gedreht wird. Anschließend erfolgt die beschriebene Interferenzmessung. Sobald das Meßergebnis im Rechner 22 ausgewertet worden ist, wird die Meßeinrichtung 4 um den nächsten Winkelschritt gedreht. Auf diese Weise kann stufenweise der gesamte Umfang der Bohrungswandung 9 vermessen werden. Für diesen Fall ist eine entsprechende Zahl von Fenstern 7 vorgesehen.

Es ist auch möglich, das gesamte Werkzeug 1 mit der Meßeinrichtung 4 mit konstanter Geschwindigkeit zu drehen und hierbei fortlaufend zu messen.

Der Analog/Digital-Wandler 21 erhält über einen Winkelgeber 25 und einen nachgeschalteten Taktgenerator 26 entsprechende Taktsignale. Auf einen Winkelgeber kann verzichtet werden, wenn die Winkellage oder die Winkelgeschwindigkeit von der Werkzeugmaschine genau vorgegeben werden kann.

Nach einer vollständigen Umdrehung des Werkzeuges 1 oder deren Meßeinrichtung 4 wird die Meßeinrichtung 4 mit dem Linearantrieb 6 (Fig. 1) oder das Werkzeug 1 mittels eines Antriebes der Werkzeugmaschine um ein gewünschtes Maß verschoben, so daß der aus dem Fenster 7 des Werkzeuges 1 austretende Lichtstrahl auf eine andere Umfangsebene der Bohrungswandung 9 trifft. Die Linearverschiebung der Meßeinrichtung 4 bzw. des Interferometers 31 erfolgt über den dem Rechner 22 nachgeschalteten Motor 6 (Fig. 2), der vom Rechner 22 über einen Motortreiber 24 angesteuert wird. Die vom Linearantrieb 6 erzeugte und im Linearlager 20 geführte Linearbewegung des Sensorkopfes 33 wird von einem Wegmeßsystem 35 (Fig. 1) gemessen und auch gesteuert. Das Wegmeßsystem 35 ist im Werkzeug 1 untergebracht. Dann wird in der beschriebenen Weise das Werkzeug 1 und/oder die Meßeinrichtung 4 um ihre Achse gedreht, um die Bohrungswandung 9 in der neuen Axiallage zu vermessen. Auf diese Weise kann die Bohrungswandung 9 über einen Teil ihrer axialen Länge oder auch über ihre gesamte axiale Länge vermessen werden. In Fig. 2 ist schematisch auch die Datenübertragung vom rotierenden Meßsystem zum feststehenden Rechner 22 dargestellt. Die Daten- und Energieübertragung erfolgt bidirektional zwischen der rotierenden Meßeinrichtung 4 und dem feststehenden Rechner 22 bzw. dem Motortreiber 24 und wird in bekannter Weise über eine induktive Kopplung 32 mit Sende- und Empfangsteil sowie rotierender und stehender Antenne vorgenommen. Fig. 1 zeigt eine weitere Systemstelle, an der die Kopplung 32 vorgesehen werden kann.

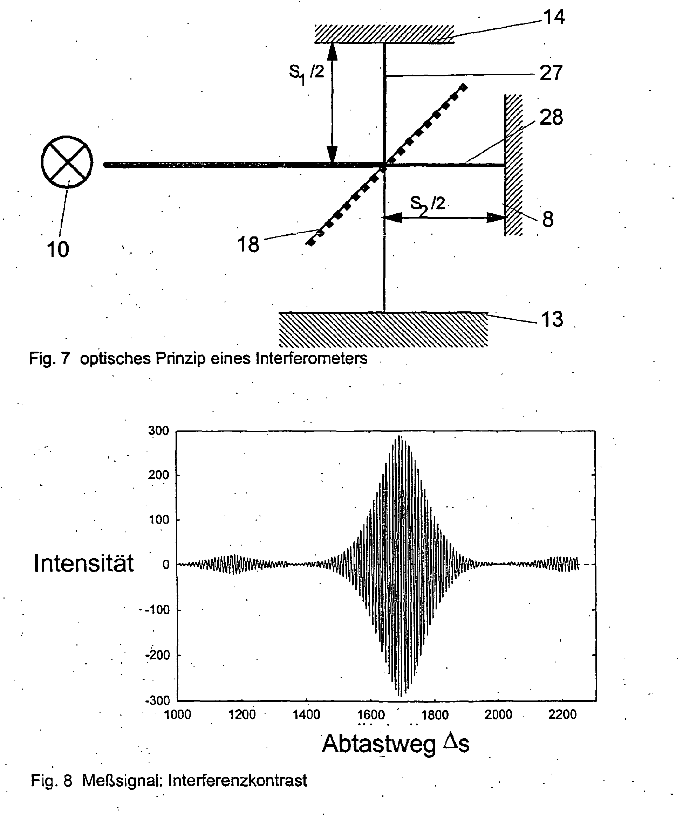

Sofern die Meßstelle 8 beispielsweise auf dem gewünschten Durchmesser liegt, sind die beiden Strahlwege des Referenz- und Meßarms (Fig. 5) gleich groß. Das Meßsignal, das in Fig. 8 beispielhaft dargestellt ist, weist in diesem Fall ein Maximum auf. Im Diagramm gemäß Fig. 8 ist die Intensität gegen den Weg aufgetragen. Aus der Lage des Maximums des Interferenzkontrastes kann der Radius der Bohrung 9 bestimmt werden. Die Intensität des Meßsignales ergibt sich in bekannter Weise nach folgender Gleichung:

$$I(\Delta s) = I_0 \{1 + m\, \gamma_{21}\, (\Delta s) \cos (2\pi/\lambda \cdot \Delta s + \varphi)\}$$

Hierbei bedeuten:

m = Modulationsgrad
$\gamma_{21}$ = wechselseitiger Kohärenzgrad
$\lambda$ = mittlere Wellenlänge
$\Delta s$ = optischer Wegunterschied
$\varphi$ = materialabhängiger Phasensprung.

Der Modulationsgrad m ist abhängig von der Lichtintensität und vom Reflexionsgrad. Im Maximum des Interferenzsignals (Fig. 8) beträgt der optische Wegunterschied $\Delta s$ Null. Mit der Meßeinrichtung 4 wird der optische Wegunterschied $\Delta s$ zwischen dem Referenzstrahl 27 und dem Meßstrahl 28 durch Verschieben des Strahlteilers 18 in Richtung des Meßstrahles 28 durchgestimmt und der hierbei erfaßte Interferenzkontrast (Fig. 8) ausgewertet. Weicht die Meßstelle 8 beispielsweise vom gewünschten Durchmesser ab, hat der Meßstrahl 28 eine andere Länge als der konstant lange Referenzarm 27. Der Sensorkopf 33 wird über den gesamten Meßbereich verschoben und dabei das Interferenzsignal aufgezeichnet. Anschließend wird das Interferenzmaximum in Abhängigkeit vom Verschiebeweg bestimmt. Daraus läßt sich der Durchmesser der Bohrung bestimmen.

Kleinere Formabweichungen lassen sich durch Verschieben des Referenzspiegels 14 und der Aufzeichnung des zugehörigen Verschiebeweges erfassen. Auch hier wird das Interferenzsignal aufgezeichnet und das Interferenzmaximum in Abhängigkeit vom Verschiebeweg ausgewertet.

Fig. 7 zeigt die prinzipielle Wirkungsweise der Meßeinrichtung 4. Das von der Lichtquelle 10 ausgesandte Licht wird durch den teildurchlässigen Spiegel 18 in den reflektierten Strahl 27 und in den hindurchgehenden Strahl 28 aufgespalten. Der reflektierte Strahl 27 gelangt zum Referenzspiegel 14, an dem er wieder zurück zum Teilerspiegel 18 reflektiert wird. Der hindurchgehende Strahl 28 trifft auf die Meßstelle 8, an der er wieder reflektiert wird. Die beiden teilkohärenten Strahlen 27, 28 vereinigen sich wieder am Teilerspiegel 18 und interferieren dabei. Die beiden vereinten Strahlen gelangen dann zum Empfänger 13. Die Auswertung des Interferenzkontrastes ermöglicht eine Auflösung von weniger als 1μm.

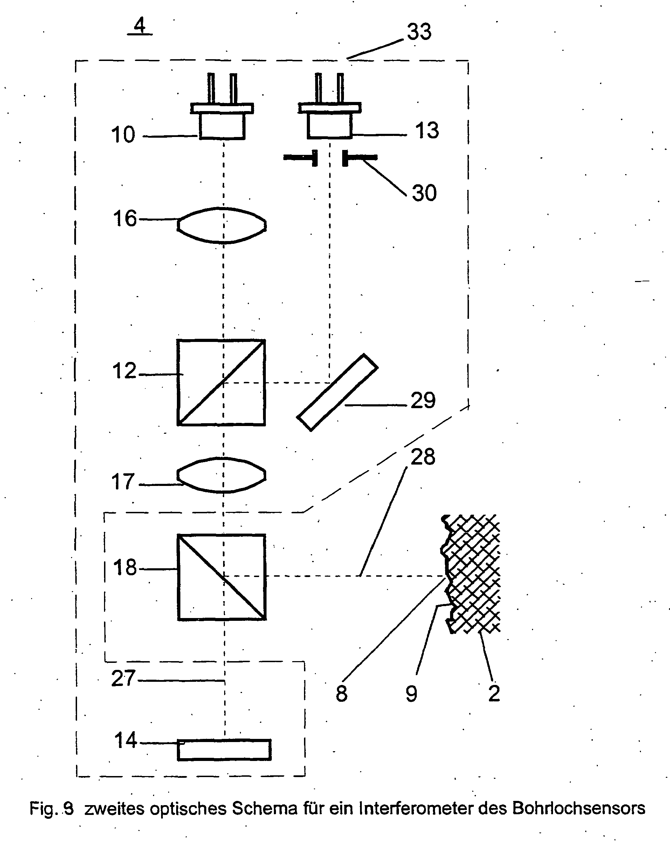

Bei der Ausführungsform gemäß Fig. 9 gelangt das von der Lichtquelle 10 ausgesandte Licht über eine Sammellinse 16 zum Teiler 12. Der Lichtstrahl durchsetzt den Teiler 12 und gelangt über die Sammellinse 17 zum Strahlteiler 18. Ein Teil 27 dieses Lichtstrahles durchsetzt den Strahlteiler 18 und trifft auf den Spiegel 14, an dem dieser Strahl 27 wieder zurück zum Strahlteiler 18 reflektiert wird. Ein anderer Teil 28 des Lichtstrahles wird am Strahlteiler 18 auf die Meßstelle 8 an der Innenwandung 9 des Werkstückes 2 gelenkt. Am Strahlteiler 18 werden der vom Referenzspiegel 14 reflektierte Referenzstrahl 27 und der vom Werkstück 2 reflektierte Meßstrahl 28 wieder vereint und interferieren dabei. Die beiden vereinten Strahlen gelangen über die Sammellinse 17 zum Teiler 12, an dem sie zu einem Umlenkspiegel 29 umgelenkt werden, der diese Strahlen zum Empfänger 13 reflektiert, dem eine Lochblende 30 für den Durchtritt der Strahlen vorgeschaltet ist. Die Lochblende 30 kann auch bei der vorigen Ausführungsform dem Empfänger 13 vorgeschaltet sein.

Liegt die vom Meßstrahl 28 erfaßte Meßstelle 8 beispielsweise auf dem gewünschten Durchmesser, dann sind die beiden Strahlwege des Referenzarms 27 und des Meßarms 28 gleich groß. Das Meßsignal (Fig. 8) weist dann ein Maximum auf. Weicht hingegen die Meßstelle 8 vom gewünschten Durchmesser ab, sind der Referenzarm 27 und der Meßarm 28 unterschiedlich groß. Um das Interferenzmaximum zu erreichen, wird dann, wie anhand der vorigen Ausführungsform beschrieben, der Sensorkopf 33 über den gesamten Meßbereich verschoben und dabei das Interferenzsignal aufgezeichnet. Anschließend wird das Interferenzmaximum in Abhängigkeit vom Verschiebeweg bestimmt. Daraus läßt sich der Durchmesser der Bohrung bestimmen. Diese Ausführungsform ist leicht zu justieren und weist wenig internes Streulicht auf. Auch kann die Beleuchtung eingestellt werden. Die Sammellinse 16, der Strahlteiler 12, die Sammellinse 17, der Strahlteiler 18 und der Umlenkspiegel 14 liegen bei dieser Ausführungsform in einer gemeinsamen Achse. Im übrigen ist dieses Ausführungsbeispiel gleich ausgebildet wie die vorige Ausführungsform.

## Patentansprüche

1.   Werkzeug (1) mit einem Schaft (34), **dadurch gekennzeichnet, daß** im Werkzeug (1) zur Erfassung von Dimensionen von Prüflingen (2), insbesondere von Hohlkörpern, vorzugsweise von Vertiefungen in Werkstücken, eine Meßeinrichtung (4) untergebracht ist, die wenigstens eine Lichtquelle (10) aufweist, deren Lichtstrahlen durch einen Strahlteiler (18) in einen Referenzstrahl (27) und einen Meßstrahl (28) aufgeteilt werden, daß der einen Meßarm bildende Meßstrahl (28) einer Meßstelle (8) des Prüflings (2) und der einen Referenzarm bildende Referenzstrahl (27) einem Referenzspiegel (14) der Meßeinrichtung (4) zuführbar sind, und daß die an der Meßstelle (8) und am Referenzspiegel (14) reflektierten, zeitlich inkohärenten Strahlen am Strahlteiler (18) wieder zusammengeführt und einem Empfänger (13) der Meßeinrichtung (4) zuführbar sind.

2.   Werkzeug nach Anspruch 1,
**dadurch gekennzeichnet, daß** ein optischer Wegunterschied ($\Delta$s) im Meß- oder im Referenzarm (27), (28) oder in beiden Armen durchstimmbar ist.

3.   Werkzeug nach Anspruch 1 oder 2,
**dadurch gekennzeichnet, daß** der Empfänger (13) an einen Rechner (22) angeschlossen ist, der die Signale des Empfängers (13) auswertet, und daß vorteilhaft zwischen dem Empfänger (13) und dem Rechner (22) ein Analog/Digital-Wandler (21) liegt.

4.   Werkzeug nach einem der Ansprüche 1 bis 3,
**dadurch gekennzeichnet, daß** das Werkzeug (1) wenigstens eine Durchtrittsöffnung (7) für den zur Meßstelle (8) gelangenden Meßstrahl (28) aufweist.

5.   Werkzeug nach einem der Ansprüche 1 bis 4,
**dadurch gekennzeichnet, daß** die Meßeinrichtung (4) vorteilhaft innerhalb des Werkzeuges (1) um ihre Achse drehbar angetrieben ist.

6.   Werkzeug nach einem der Ansprüche 1 bis 4,
**dadurch gekennzeichnet, daß** die Meßeinrichtung (4) zusammen mit dem Werkzeug (1) drehbar und vorzugsweise innerhalb des Werkzeugges (1) in einem Gehäuse (5) untergebracht ist.

7.   Werkzeug nach einem der Ansprüche 1 bis 6,
**dadurch gekennzeichnet, daß** zumindest ein Teil der Meßeinrichtung (4) in Richtung ihrer Achse verschiebbar ist, und daß vorzugsweise ein Linearantrieb (6) vom Rechner (22) angesteuert wird.

**8.** Werkzeug nach Anspruch 7,
**dadurch gekennzeichnet, daß** das Gehäuse (5) der Meßeinrichtung (4) innerhalb des Werkzeuges (1) axial verschiebbar ist.

**9.** Werkzeug nach Anspruch 7,
**dadurch gekennzeichnet, daß** die Meßeinrichtung (4) zusammen mit dem Werkzeug (1) axial verschiebbar und vorzugsweise zur Erfassung des Verschiebeweges der Meßeinrichtung (4) ein Wegmeßsystem (35) vorgesehen ist, das vorteilhaft im Werkzeug (1) untergebracht ist.

**10.** Werkzeug nach einem der Ansprüche 1 bis 9,
**dadurch gekennzeichnet, daß** der Referenzspiegel (14) außerhalb der Drehachse der Meßeinrichtung (4) liegt.

**11.** Werkzeug nach einem der Ansprüche 1 bis 9,
**dadurch gekennzeichnet, daß** der Referenzspiegel (14) in der Drehachse der Meßeinrichtung (4) liegt.

**12.** Verfahren zur Erfassung von Dimensionen von Prüflingen unter Verwendung des Werkzeuges nach einem der Ansprüche 1 bis 11,
**dadurch gekennzeichnet, daß** an eine Meßstelle (8) des Prüflings (2) ein Meßstrahl (28) gelenkt wird, der an der Meßstelle (8) zurückreflektiert und mit einem Referenzstrahl (27) zusammengefaßt wird, und daß der entstehende Interferenzkontrast zur Erfassung der Dimension des Prüflings (2) ausgewertet wird.

**13.** Verfahren nach Anspruch 12,
**dadurch gekennzeichnet, daß** die Meßeinrichtung (4) nach einer Messung um einen vorgegebenen Winkel gedreht wird.

**14.** Verfahren nach Anspruch 12,
**dadurch gekennzeichnet, daß** die Meßeinrichtung (4) während der Messung fortlaufend gedreht wird.

**15.** Verfahren nach einem der Ansprüche 12 bis 14,
**dadurch gekennzeichnet, daß** die Meßeinrichtung (4) nach einer Drehung, vorzugsweise einer 360°-Drehung, axial versetzt wird.

**16.** Meßeinrichtung zur Verwendung bei einem Werkzeug nach einem der Ansprüche 1 bis 11, mit einem Interferometer (31), das einen Stahlteiler (18) aufweist, mit dem ein von wenigstens einer Lichtquelle (10) kommender Lichtstrahl in einen Referenzstrahl (27) und in einen Meßstrahl (28) aufgeteilt wird, von denen der Referenzstrahl (27) an einem Referenzspiegel (14) und der Meßstrahl (28) an einer Meßstelle (8) reflektiert werden, der zusammen mit dem Referenzstrahl (27) am Strahlteiler (18) zusammengeführt und einem Empfänger (13) zugeführt wird,
**dadurch gekennzeichnet, daß** ein optischer Wegunterschied ($\Delta$s) zwischen dem Referenzstrahl (27) und dem Meßstrahl (28) durch Verschieben des Strahlteilers (18) in Richtung des Meßstrahles (28) durchstimmt wird.

**Claims**

**1.** Tool (1) having a shank (34), **characterised in that** there is accommodated in the tool (1) for the detection of dimensions of specimens (2), especially of hollow bodies, preferably of recesses in workpieces, a measuring device (4) which has at least one light source (10), the light beams of which are split by a beam splitter (18) into a reference beam (27) and a measuring beam (28), **in that** the measuring beam (28) forming a measuring arm can be supplied to a measuring point (8) of the specimen (2) and the reference beam (27) forming a reference arm can be supplied to a reference mirror (14) of the measuring device (4), and **in that** the temporally incoherent beams reflected at the measuring point (8) and at the reference mirror (14) are brought together again at the beam splitter (18) and can be supplied to a receiver (13) of the measuring device (4).

**2.** Tool according to claim 1,
**characterised in that** an optical path difference ($\Delta$s) is variable in the measuring arm or in the reference arm (27), (28) or in both arms.

**3.** Tool according to claim 1 or 2,
**characterised in that** the receiver (13) is connected to a computer (22) which analyses the signals of the receiver (13), and **in that** there is advantageously disposed between the receiver (13) and the computer (22) an analogue-to-digital converter (21).

4. Tool according to any one of claims 1 to 3,
**characterised in that** the tool (1) has at least one passage opening (7) for the measuring beam (28) arriving at the measuring point (8).

5. Tool according to any one of claims 1 to 4,
**characterised in that** the measuring device (4) is advantageously driven so as to rotate about its axis inside the tool (1).

6. Tool according to any one of claims 1 to 4,
**characterised in that** the measuring device (4) is rotatable together with the tool (1) and is preferably accommodated inside the tool (1) in a housing (5).

7. Tool according to any one of claims 1 to 6,
**characterised in that** at least a portion of the measuring device (4) is displaceable in the direction of the axis of said device, and **in that** preferably a linear drive (6) is controlled by the computer (22).

8. Tool according to claim 7,
**characterised in that** the housing (5) of the measuring device (4) is axially displaceable inside the tool (1).

9. Tool according to claim 7,
**characterised in that** the measuring device (4) is axially displaceable together with the tool (1) and there is preferably provided for the detection of the displacement path of the measuring device (4) a position measuring system (35) which is advantageously accommodated in the tool (1).

10. Tool according to any one of claims 1 to 9,
**characterised in that** the reference mirror (14) is disposed outside the rotational axis of the measuring device (4).

11. Tool according to any one of claims 1 to 9,
**characterised in that** the reference minor (14) is disposed in the rotational axis of the measuring device (4).

12. Method for detecting dimensions of specimens using the tool according to any one of claims 1 to 11,
**characterised in that** there is directed onto a measuring point (8) of the specimen (2) a measuring beam (28) which, at the measuring point (8), is reflected back and combined with a reference beam (27), and **in that** the interference contrast produced is analysed to detect the dimension of the specimen (2).

13. Method according to claim 12,
**characterised in that**, after a measurement, the measuring device (4) is rotated about a specified angle.

14. Method according to claim 12,
**characterised in that**, during the measurement, the measuring device (4) is rotated continuously.

15. Method according to any one of claims 12 to 14,
**characterised in that**, after a rotation, preferably a 360° rotation, the measuring device (4) is axially displaced.

16. Measuring device for use with a tool according to any one of claims 1 to 11, with an interferometer (31) having a beam splitter (18), with which a light beam from at least one light source (10) is split into a reference beam (27) and into a measuring beam (28), of which beams the reference beam (27) is reflected at a reference mirror (14) and the measuring beam (28) is reflected at a measuring point (8), which measuring beam is brought together with the reference beam (27) at the beam splitter (18) and is supplied to a receiver (13),
**characterised in that** an optical path difference ($\Delta s$) between the reference beam (27) and the measuring beam (28) is varied by displacement of the beam splitter (18) in the direction of the measuring beam (28).

**Revendications**

1. Outil (1) comprenant une tige (34), **caractérisé en ce que**, pour détecter des dimensions de pièces à contrôler (2), en particulier de corps creux, et de préférence de renfoncement dans des pièces à oeuvrer, un moyen de mesure (4) est logé dans l'outil (1) qui comprend au moins un une source de lumière (10) dont les rayons lumineux sont subdivisés par un diviseur de rayonnement (18) en un rayon de référence (27) et un rayon de mesure (28), **en ce que** le rayon de mesure (28) formant un bras de mesure peut être amené à un emplacement de mesure (8) de la pièce à contrôler (2) et le rayon de référence (27) formant un bras de référence peut être amené à un miroir de référence (14) du moyen de mesure (4), et **en ce que** les rayons réfléchis au niveau de l'emplacement de mesure (8) et au niveau du miroir de référence (14), temporellement incohérents, sont de nouveau regroupés au niveau du diviseur de rayonnement (18) et admis à un récepteur (13) du moyen de mesure (4).

2. Outil selon la revendication 1, **caractérisé en ce qu'**une différence de trajet optique ($\Delta s$) dans le bras de mesure ou dans le bras de référence (27, 28) ou dans les deux bras peut être réglée de façon variable.

3. Outil selon la revendication 1 ou 2, **caractérisé en ce que** le récepteur (13) est branché à un calculateur (22) qui analyse les signaux du récepteur (13), et **en ce qu'**il est prévu avantageusement un convertisseur analogique/numérique (21) entre le récepteur (13) et le calculateur (22).

4. Outil selon l'une des revendications 1 à 3, **caractérisé en ce que** l'outil (1) comporte au moins une ouverture traversante (7) pour le rayon de mesure (28) qui parvient à l'emplacement de mesure (8).

5. Outil selon l'une des revendications 1 à 4, **caractérisé en ce que** le moyen de mesure (4) et avantageusement entraîné en rotation autour de son axe à l'intérieur de l'outil (1).

6. Outil selon l'une des revendications 1 à 4, **caractérisé en ce que** le moyen de mesure (4) est rotatif conjointement avec l'outil (1) et est de préférence logé dans un boîtier (5) à l'intérieur de l'outil (1).

7. Outil selon l'une des revendications 1 à 6, **caractérisé en ce qu'**une partie au moins du moyen de mesure (4) est capable de translation en direction de son axe, et **en ce qu'**il est de préférence prévu un entraînement linéaire (6) piloté par le calculateur (22).

8. Outil selon la revendication 7, **caractérisé en ce que** le boîtier (5) du moyen de mesure (4) est capable de translation axialement à l'intérieur de l'outil (1).

9. Outil selon la revendication 7, **caractérisé en ce que** le moyen de mesure (4) est capable de translation axiale conjointement avec l'outil (1), et **en ce que** pour la détection du trajet de translation du moyen de mesure (4), il est de préférence prévu un système de mesure de course (35) qui est avantageusement logé dans l'outil (1).

10. Outil selon l'une des revendications 1 à 9, **caractérisé en ce que** le miroir de référence (14) est situé à l'extérieur de l'axe de rotation du moyen de mesure (4).

11. Outil selon l'une des revendications 1 à 9, **caractérisé en ce que** le miroir de référence (14) est situé dans l'axe de rotation du moyen de mesure (4).

12. Procédé pour détecter des dimensions de pièces à contrôler en utilisant l'outil selon l'une des revendications 1 à 11, **caractérisé en ce qu'**un rayon de mesure (27) est dirigé vers un emplacement de mesure (8) de la pièce à un contrôler (2), réfléchi au niveau de l'emplacement de mesure (8), et regroupé à un rayon de référence (27), et **en ce que** le contraste d'interférence engendré est analysé pour déterminer la dimension de la pièce à contrôler (2).

13. Procédé selon la revendication 12, **caractérisé en ce que** le moyen de mesure (4) est tourné d'un angle prédéterminé après une mesure.

14. Procédé selon la revendication 12, **caractérisé en ce que** le moyen de mesure (4) est tourné en permanence pendant la mesure.

15. Procédé selon l'une des revendications 12 à 14, **caractérisé en ce que** le moyen de mesure (4) est décalé axialement après une rotation, de préférence une rotation de 360°.

**16.** Moyen de mesure à utiliser dans un outil selon l'une des revendications 1 à 11, comprenant un interféromètre (31) qui comprend un diviseur de rayonnement (18) au moyen duquel un rayon de lumière provenant d'au moins une source de lumière (10) est subdivisé en un rayon de référence (27) et un rayon de mesure (28), parmi lesquels le rayon de référence (27) est réfléchi au niveau d'un miroir de référence (14) et le rayon de mesure (28) est réfléchi au niveau d'un emplacement de mesure (8), puis regroupé avec le rayon de référence (27) au niveau du diviseur de rayonnement (18) et admis à un récepteur (13),

**caractérisé en ce qu'**une différence de trajet optique (Δs) entre le rayon de référence (27) et le rayon de mesure (28) peut être réglée de manière variable par translation du diviseur de rayonnement (18) en direction du rayon de mesure (28).

Fig. 1

Fig. 2 Informationsflußschema des Bohrlochsensors

EP 1 018 631 B1

4    33

13

30

11    10

27

12

14

16

18    15

17

28

19

8

2

Fig. 3  erstes optisches Schema für ein Interferometer des Bohrlochsensors

Fig. 4 Beleuchtungsstrahlengang zu Fig. 3

Fig. 5 Referenz- und Meßstrahlengang zu Fig. 3

Fig. 6 Interferenzstrahlengang zu Fig. 3

Fig. 7 optisches Prinzip eines Interferometers

Fig. 8 Meßsignal: Interferenzkontrast

Fig. 9 zweites optisches Schema für ein Interferometer des Bohrlochsensors